# EUROPÄISCHE PATENTANMELDUNG

(11) **EP 4 112 539 A1**
(43) Veröffentlichungstag der Anmeldung: **04.01.2023**
(21) Anmeldenummer: 21020333.7
(22) Anmeldetag: 30.06.2021
(51) Int. Cl.: C01B 3/04, B01D 53/047, B01D 53/58, C01B 3/56, C01C 1/12, C25B 1/04

(54) **VERFAHREN UND VORRICHTUNG ZUR ERZEUGUNG VON WASSERSTOFF AUS AMMONIAK**

(71) Anmelder: Linde GmbH, 82049 Pullach (DE)
(72) Erfinder: Wawrzinek, Klemens, Grünwald (DE); Peschel, Andreas, Wolfratshausen (DE); Bonfert, Heike, Puchheim (DE)
(74) Vertreter: Fischer, Werner

(57) **Zusammenfassung**

Die Erfindung betrifft ein Verfahren sowie eine Vorrichtung zur Erzeugung eines Wasserstoffprodukts (6) aus Ammoniak, wobei ein Ammoniak enthaltender Einsatzstoff (1) unter Verwendung eines brennerbefeuerten Spaltofens (S) mit katalytischer Unterstützung zu einem Wasserstoff und Stickstoff enthaltenden Spaltgas (3) umgesetzt wird, von dem das Wasserstoffprodukt (6) unter Erhalt eines stickstoffreichen, brennbare Stoffe umfassenden Restgases (7) abgetrennt wird, wobei zumindest ein Teil des Restgases (7) zur Befeuerung des Spaltofens (S) verbrannt wird. Kennzeichnend hierbei ist, dass aus einer Sauerstoffquelle (E) ein sauerstoffreicher Stoffstrom (8) zugeführt und direkt oder nach Zumischung von Luft (13) bei der Verbrennung des Restgases (7) als Oxidationsmittel eingesetzt wird.

## Beschreibung

Die Erfindung betrifft ein Verfahren zur Erzeugung eines Wasserstoffprodukts aus Ammoniak, wobei ein Ammoniak enthaltender Einsatzstoff unter Verwendung eines brennerbefeuerten Spaltofens mit katalytischer Unterstützung zu einem Wasserstoff und Stickstoff enthaltenden Spaltgas umgesetzt wird, von dem das Wasserstoffprodukt unter Erhalt eines stickstoffreichen, brennbare Stoffe umfassenden Restgases abgetrennt wird, wobei zumindest ein Teil des Restgases zur Befeuerung des Spaltofens verbrannt wird.

Weiterhin betrifft die Erfindung eine Vorrichtung zur Durchführung des erfindungsgemäßen Verfahrens.

Die Erzeugung von Wasserstoff durch katalytisch unterstütze Spaltung von Ammoniak ist bekannt und seit vielen Jahren Stand der Technik. Die dabei ablaufende Reaktion

2NH₃ ↔ N₂ + 3H₂

ist endotherm (ΔH=46,2kJ/mol). Die Lage des Gleichgewichts und die Reaktionsgeschwindigkeit hängen stark von Druck und Temperatur sowie von der Art des eingesetzten Katalysators ab.

Insbesondere für industrielle Anwendungen mit vergleichsweise geringem Wasserstoffbedarf von weniger als 1000mₙ³/h, wie beispielsweise für die Wärmebehandlung von Metallen, ist die Ammoniakspaltung mit Hilfe elektrisch beheizter Spaltöfen wirtschaftlich vorteilhaft. Prinzipiell kann der Wasserstoff hierbei ohne Freisetzung von Kohlendioxid zur Verfügung gestellt werden.

Um Wasserstoff aus Ammoniak mit höheren Raten herzustellen, können ähnliche Anlagen eingesetzt werden, wie sie heute zur großtechnischen Synthesegaserzeugung durch Dampfreformierung von Kohlenwasserstoffen verwendet werden. Derartige Anlagen umfassen einen Spaltofen mit einem Feuerraum, in dem mit Katalysatormaterial gefüllte Spaltrohre angeordnet sind, sowie ein Abhitzesystem. Der Feuerraum wird durch einen oder mehrere Brenner beheizt, die Energie für die endotherm ablaufende Spaltung des durch die Spaltrohre geführten Ammoniaks liefern. Die von den Brennern erzeugten Rauchgase können hierbei nur einen kleinen Teil ihrer fühlbaren Wärme an die Spaltrohre abgeben, so dass sie den Feuerraum mit hoher Temperatur und einem großen Inhalt an Restwärme verlassen. Um die Wasserstofferzeugung effizient durchführen zu können, werden die heißen Rauchgase ebenso wie das heiß aus den Spaltrohren strömende Spaltgas zur Vorwärmung von Einsatzstoffen wie Ammoniak und Brennerluft sowie ggf. zur Dampferzeugung genutzt. Da bei der Ammoniakspaltung kein oder nur sehr wenig Dampf im Prozess selbst eigesetzt werden kann, wird der erzeugte Dampf entweder exportiert oderbeispielsweise über einen "Organic Rankine Cycle" - zur Stromerzeugung verwendet.

Damit der erzeugte Wasserstoff ohne oder mit nur geringem Verdichtungsaufwand als Produkt abgegeben werden kann, wird die Ammoniakspaltung zweckmäßigerweise bei Drücken zwischen 10 und 40bar durchgeführt. Dies ist umso einfacher möglich, als der Druck des gewöhnlich flüssig vorliegenden Ammoniak enthaltenden Einsatzstoffs mit wenig Energieaufwand erhöht werden kann. Damit unter diesen Bedingungen ein ausreichend hoher, wirtschaftlich sinnvoller Umsetzungsgrad des eingesetzten Ammoniaks erreicht wird, ist es notwendig, die Spaltung bei Temperaturen zwischen 500 und 1000°C zu betreiben.

Das Spaltgas besteht zu einem großen Teil aus Wasserstoff und Stickstoff, enthält daneben aber auch nicht umgesetztes Ammoniak sowie evtl. Wasser, das bereits in dem Ammoniak enthaltenden Einsatzstoff vorliegt bzw. zusätzlich als Temperaturmoderator in die Spaltrohre eingeleitet wird, jedoch nicht an der Spaltreaktion teilnimmt.

Zur Gewinnung des Wasserstoffs wird das Spaltgas einer Trenneinrichtung zugeführt, in der es nach der Entfernung des überwiegenden Teils des nicht umgesetzten Ammoniaks und der Abtrennung von enthaltenem Wasser vorzugsweise durch Druckwechseladsorption behandelt wird, wobei eine weitgehend stickstofffreie Wasserstofffraktion sowie ein zum Großteil aus Stickstoff bestehendes und Ammoniak enthaltendes Restgas erzeugt werden. Während die Wasserstofffraktion als Produkt abgegeben werden kann, wird das Restgas zurückgeführt und zur Befeuerung des Spaltofens unter Verwendung von Luft als Oxidationsmittel verbrannt.

Aufgrund seines hohen Stickstoffanteils ist der Heizwert des Restgases vergleichsweise gering, so dass zur Beheizung des Spaltofens u.U. weiterer Brennstoff, wie z.B. Ammoniak, zugefeuert werden muss. Darüber hinaus bedingt der hohe Stickstoffanteil sehr große Rauchgasmengen, deren Restwärme nur durch den Einsatz entsprechend großer und teurer Wärmetauscher im Abhitzesystem genutzt werden kann.

Aufgabe der vorliegenden Erfindung ist es, ein Verfahren und eine Vorrichtung der gattungsgemäßen Art anzugeben, die es erlauben, Wasserstoff aus Ammoniak wirtschaftlicher zu erzeugen, als es nach dem Stand der Technik möglich ist.

Die gestellt Aufgabe wird verfahrensseitig erfindungsgemäß dadurch gelöst, dass aus einer Sauerstoffquelle ein sauerstoffreicher Stoffstrom zugeführt und direkt oder nach Zumischung von Luft bei der Verbrennung des Restgases als Oxidationsmittel eingesetzt wird.

Als sauerstoffreich gilt im Rahmen der vorliegenden Erfindung ein Stoffstrom, der zu mehr als 25% aus Sauerstoff besteht. Bevorzugt weist er jedoch einen höheren Sauerstoffgehalt von beispielsweise mehr als 99% auf.

Da das erfindungsgemäß eingesetzte Oxidationsmittel einen geringeren Stickstoffanteil als Luft besitzt, reduzieren sich gegenüber dem Stand der Technik sowohl der für die Beheizung des Spaltofens benötigte Brennstoffbedarf als auch die erzeugte Rauchgasmenge. Zur Nutzung der Restwärme des Rauchgases kann das Abhitzesystem daher kostengünstiger mit kleineren bzw. - wenn beispielsweise eine Dampferzeugung entfallen kann - weniger Wärmetauschern ausgeführt werden. Wegen seines hohen Stickstoffgehalts ist es möglich, das Restgas unabhängig vom Sauerstoffgehalt des eingesetzten Oxidationsmittels über konventionelle Brenner zu verfeuern, wie sie auch zur Restgasverfeuerung mit Luft eingesetzt werden.

Bei der Sauerstoffquelle kann es sich beispielsweise um einen kryogenen Luftzerleger handeln. Denkbar ist es auch, als Sauerstoffquelle einen Elektrolyseur einzusetzen, der Wasser elektrochemisch zerlegt und einen wasserstoff- sowie einen sauerstoffreichen Stoffstrom erzeugt. Während zumindest ein Teil des sauerstoffreichen Stoffstroms direkt oder nach Zumischung von Luft als Oxidationsmittel bei der Verbrennung des Restgases eingesetzt wird, kann der wasserstoffreiche Stoffstrom als Brennstoff zur Befeuerung des Spaltofens und/oder zur Ergänzung der Menge des durch die Ammoniakspaltung erzeugten Wasserstoffs verwendet werden. Der Elektrolyseur kann die beiden Stoffströme mit gleichen oder unterschiedlichen Drücken erzeugen. Zweckmäßigerweise wird sowohl der sauerstoffals auch der wasserstoffreiche Stoffstrom mit einem Druck erzeugt, der ausreichend hoch ist, um jeden der beiden Stoffströme ohne den Einsatz eines Verdichters ihrer weiteren Verwendung zuführen zu können.

Die Abtrennung von Wasserstoff aus dem im Spaltofen erhaltenen Spaltgas erfolgt in einer Trenneinrichtung, die eine als Produkt abgebbare Wasserstofffraktion sowie das stickstoffreiche, brennbare Stoffe umfassende Restgas liefert. Zur Erhöhung der durch Ammoniakspaltung erzeugten Wasserstoffmenge, kann der wasserstoffreiche, durch den Elektrolyseur erzeugte Stoffstrom der Wasserstofffraktion stromabwärts der Trenneinrichtung direkt oder nach Entfernung von Wasser und anderen Verunreinigungen zugemischt werden. Möglich ist es aber auch, den wasserstoffreichen Stoffstrom aus dem Elektrolyseur in die Trenneinrichtung zu überführen und gemeinsam mit dem Spaltgas zu der als Produkt abgebbaren Wasserstofffraktion aufzubereiten.

In Spuren vorliegender Wasserstoff kann im sauerstoffreichen Stoffstrom des Elektrolyseurs belassen werden, da er den Heizwert der dem Spaltofen insgesamt zugeführten Brennstoffe erhöht und so die erzeugte Rauchgasmenge verringert.

Eine vorteilhafte Ausgestaltung des erfindungsgemäßen Verfahrens sieht vor, dass der Elektrolyseur so betrieben wird, dass die Menge des produzierten Sauerstoffs stets so groß ist, wie der momentane Sauerstoffbedarf des Spaltofens. Falls es nicht möglich ist, die Sauerstoff-Leistung des Elektrolyseurs schnell genug an dem Sauerstoffbedarf des Spaltofens anzupassen, kann überschüssig produzierter Sauerstoff in einen Zwischenspeicher überführt werden, während fehlender Sauerstoff aus dem Zwischenspeicher entnommen und/oder durch die Zuführung von Umgebungsluft ausgeglichen wird.

Der erfindungsgemäß eingesetzte Elektrolyseur kann eine Festoxid-Elektrolysezelle umfassen, die bei hohen Betriebstemperaturen zwischen 500°C und 950°C Wasserdampf spaltet. In der Elektrolysezelle trennt ein aus einem für Sauerstoffionen leitfähigen Material bestehender Elektrolyt einen Kathoden- von einem Anodenraum. In den Kathodenraum eingebrachter Wasserdampf wird an der Grenzfläche zum Elektrolyten in Wasserstoff, der auf der Kathodenseite verbleibt, und Sauerstoffionen gespalten, die zur Anodenseite wandern, wo sie zu Sauerstoffmolekülen oxidiert werden. Um den Sauerstoffpartialdruck gering zu halten und die verbauten Materialien vor Oxidation zu schützen, wird der Anodenraum mit Luft gespült. Die Festoxid-Elektrolysezelle liefert daher einen heißen sauerstoffhaltigen Stoffstrom, bei dem es sich um mit Sauerstoff angereicherte Luft handelt. Vorzugsweise wird der sauerstoffhaltige Stoffstrom ohne weitere Behandlung - insbesondere ohne Abkühlung - zur erfindungsgemäßen Bildung des Oxidationsmittels eingesetzt.

In einer anderen erfindungsgemäß einsetzbaren Elektrolysezelle, die bei vergleichbar hohen Temperaturen betrieben wird, besteht der Elektrolyt aus einer keramischen protonenleitenden Membran, an der anodenseitig dampfförmig zugeführtes Wasser gespalten wird. Während die hierbei entstehenden Wasserstoffionen zur Kathodenseite diffundieren und nach der Bildung von Wasserstoffmolekülen in einem trockenen Strom abgezogen werden, entsteht an der Anode ein wasserhaltiger sauerstoffreicher Stoffstrom.

Weitere, bei niedrigeren Temperaturen betreibbare Elektrolysezellen, die dem Fachmann als Protonen-Austausch-, Anionen-Austausch- oder alkalische Elektrolysezellen bekannt sind, eignen sich ebenfalls für den erfindungsgemäßen Einsatz.

Bei der Ammoniakspaltung wird stets ein Teil des eingesetzten Ammoniaks nicht umgesetzt und gelangt unverändert in das Spaltgas, aus dem es zum Erhalt eines Wasserstoffprodukts abgetrennt werden muss. Die Menge des nicht umgesetzten Ammoniaks erhöht sich mit sinkender Reaktionstemperatur und steigendem Reaktionsdruck. Ist der Ammoniakgehalt des Spaltgases gering, wird das Ammoniak vorzugsweise allein durch Druckwechseladsorption abgetrennt und mit dem Restgas thermisch verwertet. Bei höheren Ammoniakgehalt kann es allerdings wirtschaftlicher sein, Ammoniak zusätzlich stromaufwärts der Druckwechseladsorption aus dem Spaltgas zu entfernen und stofflich zu verwerten.

Das erfindungsgemäße Verfahren weiterbildend wird vorgeschlagen, das Spaltgas bis unter den Wassertaupunkt abzukühlen, so dass Wasser kondensiert und Ammoniak durch das kondensierte Wasser aus dem Spaltgas ausgewaschen wird.

Wenn das Spaltgas auf Temperaturen zwischen 30°C und 70°C abgekühlt wird, reicht die Menge des als Temperaturmoderator zusammen mit dem Ammoniak in die Spaltrohre eingeleiteten Wassers aus, um den Ammoniakgehalt soweit zu reduzieren, dass der im Spaltgas verbleibende Teil des Ammoniaks ohne wirtschaftliche Nachteile durch die Druckwechseladsorption abgetrennt werden kann. Eine gesonderte Zuführung von Waschwasser ist zumindest im Normalbetrieb nicht notwendig.

Vorzugsweise wird das in der Wasserwäsche erhaltene Ammoniak/Wasser-Gemisch wieder im Spaltofen eingesetzt, wobei der größte Teil des Gemisches zur Wasserstoffgewinnung in die Spaltrohre geführt und der restliche Teil zur Einstellung der in die Spaltrohre eigebrachten Wassermenge geregelt ausgeschleust und beispielsweise zur Befeuerung des Spaltofens verwendet wird.

Bei dieser Verfahrensweise kann es vorkommen, dass während des Anfahrbetriebs nicht genügend Wasser zum Spaltofen zurückgeführt wird, um den Ammoniakgehalt des Spaltgases durch Wäsche mit auskondensiertem Wasser ausreichend weit zu reduzieren. Für diesen Fall ist erfindungsgemäß vorgesehen, der Wasserwäsche zusätzlich Wasser von außen zuzuführen.

Zur Vermeidung einer Überhitzung des Spaltofens während des Abfahrbetriebs ist vorgesehen, die Spaltrohre mit Dampf oder Stickstoff zu kühlen.

Um die im Verfahren eingesetzte Energie effektiver nutzen zu können, sieht eine Ausgestaltung des erfindungsgemäßen Verfahrens vor, das im Spaltofen erhaltene heiße Spaltgas zur Beheizung eines Spaltreaktors zu nutzen, in dem durch die Spaltung von Ammoniak in Wasserstoff und Stickstoff ein weiters Spaltgas gebildet wird. Das im Spaltreaktor aus einem Teil oder der Gesamtmenge des Ammoniak enthaltenden Einsatzstoffs gebildete Spaltgas wird entweder in den Spaltrohren des Spaltofens weiterbehandelt oder mit dem bei der Beheizung des Spaltreaktors abgekühlten Spaltgas zusammengeführt.

Weiterhin betrifft die Erfindung eine Vorrichtung zur Erzeugung eines Wasserstoffprodukts aus Ammoniak, mit einem zumindest einen Brenner umfassenden Spaltofen zur katalytisch unterstützten Umsetzung eines Ammoniak enthaltenden Einsatzstoffs zu einem Wasserstoff und Stickstoff enthaltenden Spaltgas, einer Trenneinrichtung, mit der Wasserstoff aus dem Spaltgas unter Erhalt eines stickstoffreichen, brennbare Stoffe umfassenden Restgases abgetrennt werden kann, sowie einer Rückführeinrichtung, über die zumindest ein Teil des Restgases zurückführbar ist, um über den zumindest einen Brenner zur Befeuerung des Spaltofens verbrannt zu werden.

Vorrichtungsseitig wird die gestellte Aufgabe erfindungsgemäß dadurch gelöst, dass die Vorrichtung eine mit dem zumindest einen Brenner verbundene Sauerstoffquelle umfasst, aus der ein sauerstoffreicher Stoffstrom entnommen und direkt oder nach Zumischung von Luft bei der Verbrennung des Restgases als Oxidationsmittel eingesetzt werden kann.

Vorzugsweise handelt es sich bei der Sauerstoffquelle um einen Elektrolyseur, der Wasser elektrochemisch zerlegen und einen wasserstoff- sowie einen sauerstoffreichen Stoffstrom erzeugen kann. Der Elektrolyseur kann eine Festoxid-Elektrolysezelle umfassen, die bei Betriebstemperaturen zwischen 500°C und 850°C Wasserdampf spalten und einen heißen sauerstoffreichen Stoffstrom erzeugen kann.

Die Trenneinrichtung umfasst bevorzugt einen Druckwechseladsorber, der in der Lage ist, aus dem Spaltgas eine aufgrund ihrer Reinheit und ihres Ducks als Produkt abgebbare Wasserstofffraktion abzutrennen und über eine Produktgasleitung einem Abnehmer zuzuführen. Stickstoff sowie ebenfalls im Spaltgas vorliegendes Ammoniak können dem Druckwechseladsorber als Restgas entnommen werden.

Zweckmäßigerweise ist der als Sauerstoffquelle dienende Elektrolyseur nicht nur mit dem zumindest einen Brenner des Spaltofens, sondern auch mit der Trenneinrichtung verbunden, so dass der durch den Elektrolyseur erzeugbare wasserstoffreiche Stoffstrom dazu verwendet werden kann, die Menge der durch die Ammoniakspaltung erzeugten, als Produkt angebbaren Wasserstofffraktion zu ergänzen. Falls die Zusammensetzung des wasserstoffreichen Stoffstroms nicht den an ein Wasserstoffprodukt gestellten Anforderungen genügt, kann zur Abtrennung von Verunreinigungen zwischen dem Elektrolyseur und der Trenneinrichtung eine Reinigungsvorrichtung angeordnet sein. Alternativ kann der Elektrolyseur mit der Trenneinrichtung stromaufwärts des Druckwechseladsorbers verbunden sein, so dass im wasserstoffreichen Stoffstrom enthaltene Verunreinigungen durch den Druckwechseladsorber entfernt werden können.

Solange der Ammoniakgehalt einen Grenzwert nicht überschreitet, kann die Abtrennung von Stickstoff und Ammoniak aus dem Spaltgas wirtschaftlich mit Hilfe eines Druckwechseladsorbers durchgeführt werden. Sinnvollerweise wird dann das Spaltgas stromaufwärts des Druckwechseladsorbers nicht bis zum Taupunkt abgekühlt, um einen Eintrag von Flüssigkeit in den Druckwechseladsorber zu verhindern. Hierzu kann die erfindungsgemäße Vorrichtung beispielsweise mit einem regelbaren Luftkühler zur kontrollierten Spaltgaskühlung ausgeführt sein.

Falls der Ammoniakgehalt des Spaltgases über dem Grenzwert liegt, wird vorgeschlagen, stromaufwärts des Druckwechseladsorbers eine Wasserwäsche anzuordnen, die sinnvollerweise in der Lage ist, Ammoniak auszuwaschen und den Ammoniakgehalt des Spaltgases unter Bildung eines Ammoniak/Wasser-Gemisches bis unter den Grenzwert abzusenken. Weiterhin wird vorgeschlagen, die Wasserwäsche mit dem Spaltofen so zu verbinden, dass zumindest ein Teil des Ammoniak/Wasser-Gemisches in die Spaltrohre zurückgeführt werden kann.

Bevorzugt ist die Wasserwäsche mit einer Kühleirichtung ausgeführt, über die das Spaltgas bis unterhalb des Wassertaupunkts abkühlbar ist, so dass Wasser kondensieren und Ammoniak durch das kondensierte Wasser aus dem Spaltgas ausgewaschen werden kann. Besonders bevorzugt ist die Wasserwäsche ohne eine Zuführeinrichtung für zusätzliches Waschwasser und einer Kühleinrichtung ausgeführt, die in der Lage ist, das Spaltgas bis auf Temperaturen zwischen 30°C und 70°C abzukühlen.

Die erfindungsgemäße Vorrichtung kann einen mit dem Spaltofen verbunden Spaltreaktor zur Spaltung von Ammoniak umfassen, der durch heißes, im Spaltofen erhältliche Spaltgas beheizbar ist.

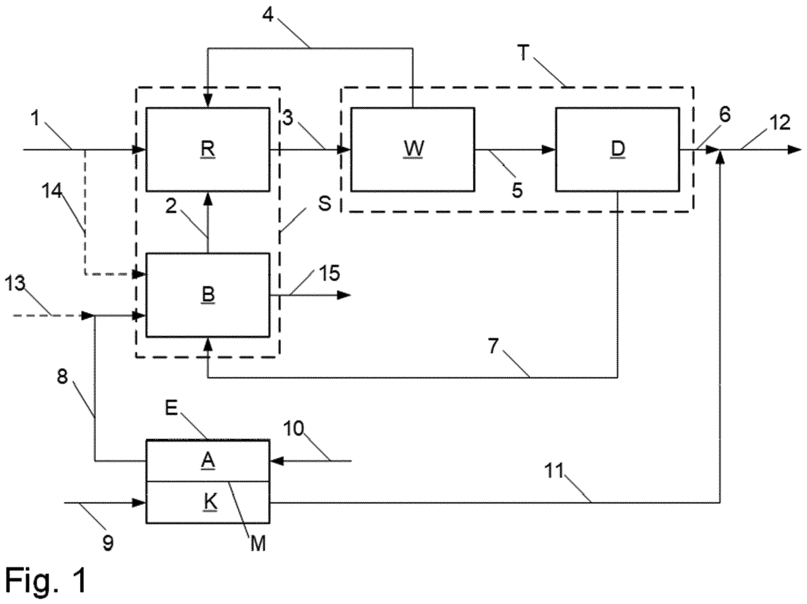

Im Folgenden soll die Erfindung anhand eines in der **Figur 1** schematisch dargestellten Ausführungsbeispiels näher erläutert werden.

Die Figur 1 zeigt die Erzeugung von Wasserstoff aus Ammoniak gemäß einer bevorzugten Ausgestaltung der Erfindung, bei der ein Elektrolyseur mit einer Festoxid-Elektrolysezelle als Sauerstoffquelle dient.

Über Leitung 1 wird dem Spaltofen S ein weitgehend aus Ammoniak bestehender, Wasser enthaltender Einsatzstoff zugeführt und in die Spaltrohre R eingeleitet, die mit durch den Brenner B erzeugter Wärme 2 beheizt werden. Mit katalytischer Unterstützung wird bei Temperaturen zwischen 500 und 1000°C der überwiegende Teil des zugeführten Ammoniaks gespalten, so dass den Spaltrohren R ein heißes, weitgehend aus Stickstoff und Wasserstoff bestehendes, Wasser und nicht umgesetztes Ammoniak enthaltendes Spaltgas 3 entnommen und in die Trenneinrichtung T überführt werden kann. In der zur Trenneinrichtung T gehörenden Wasserwäsche W wird das Spaltgas 3 auf Temperaturen zwischen 30°C und 70°C abgekühlt, wobei Wasser auskondensiert und einen Großteil des Ammoniaks auswäscht. Während das dabei gebildete Ammoniak/Wasser-Gemisch 4 zur Erhöhung der Wasserstoffausbeute des Verfahrens in die Spaltrohre R zurückgeführt wird, wird das weitgehend wasser- und ammoniakfreie Spaltgas 5 in den Druckwechseladsorber D geleitet, wo es in eine Produktreinheit aufweisende Wasserstofffraktion 6 und ein Restgas 7 getrennt wird. Das Restgas 7, das zum überwiegenden Teil aus Stickstoff besteht, daneben aber auch brennbare Komponenten wie Ammoniak und Wasserstoff enthält, wird dem Brenner B als Brennstoff zugeführt und gemeinsam mit dem Oxidationsmittel 8 verbrannt. Die Restwärme der gegen die Spaltrohre R abgekühlten Rauchgase 15 des Brenners B wird in einem Abhitzesystem (nicht dargestellt) beispielsweise zur Verdampfung und Vorwärmung des Einsatzstoffs 1 verwendet.

Das Oxidationsmittel 8, das einen höheren Sauerstoffgehalt als Luft aufweist, wird dem als Sauerstoffquelle fungierenden Elektrolyseurs E entnommen. Der eine Festoxid-Elektrolysezelle umfassende Elektrolyseur E spaltet bei Betriebstemperaturen zwischen 500°C und 950°C Wasserdampf. In der Elektrolysezelle trennt ein aus einem für Sauerstoffionen leitfähigen Material bestehender Elektrolyt M einen Kathoden- K von einem Anodenraum A. Der in den Kathodenraum K eingebrachte Wasserdampf 9 wird an der Grenzfläche zum Elektrolyten M in Wasserstoff, der auf der Kathodenseite verbleibt, und Sauerstoffionen gespalten, die zur Anodenseite wandern, wo sie zu Sauerstoffmolekülen oxidiert werden. Der Anodenraum A wird mit Luft 10 gespült wobei das heiße Oxidationsmittel 8 entsteht, das ohne Kühlung dem Brenner B zugeführt wird. Aus dem Kathodenraum K wird ein wasserstoffreicher Stoffstrom 11 abgezogen und mit der Produktreinheit aufweisende Wasserstofffraktion 6 zum Wasserstoffprodukt 12 gemischt. Optional können dem Brenner B Luft 13 als weiters Oxidationsmittel und/oder Ammoniak 14 als Zusatzbrennstoff zugeführt werden.

## Patentansprüche

1. Verfahren zur Erzeugung eines Wasserstoffprodukts (6) aus Ammoniak, wobei ein Ammoniak enthaltender Einsatzstoff (1) unter Verwendung eines brennerbefeuerten Spaltofens (S) mit katalytischer Unterstützung zu einem Wasserstoff und Stickstoff enthaltenden Spaltgas (3) umgesetzt wird, von dem das Wasserstoffprodukt (6) unter Erhalt eines stickstoffreichen, brennbare Stoffe umfassenden Restgases (7) abgetrennt wird, wobei zumindest ein Teil des Restgases (7) zur Befeuerung des Spaltofens (S) verbrannt wird, **dadurch gekennzeichnet, dass** aus einer Sauerstoffquelle (E) ein sauerstoffreicher Stoffstrom (8) zugeführt und direkt oder nach Zumischung von Luft (13) bei der Verbrennung des Restgases (7) als Oxidationsmittel eingesetzt wird.

2. Verfahren nach Anspruch 1, **dadurch gekennzeichnet, dass** als Sauerstoffquelle ein Elektrolyseur (E) genutzt wird, in dem durch elektrochemische Zerlegung von Wasser (9) ein wasserstoff- (11) sowie ein sauerstoffreicher Stoffstrom (8) gewonnen werden.

3. Verfahren nach Anspruch 2, **dadurch gekennzeichnet, dass** der Elektrolyseur (E) eine anodenseitig mit Luft (10) gespülte Festoxid-Elektrolysezelle umfasst und die bei der Spülung angewärmte und mit Sauerstoff angereicherte Luft als Oxidationsmittel (8) zur Verbrennung des Restgases (7) eingesetzt wird.

4. Verfahren nach einem der Ansprüche 2 oder 3, **dadurch gekennzeichnet, dass** der im Elektrolyseur (E) gewonnene wasserstoffreiche Stoffstrom (11) als Brennstoff zur Befeuerung des Spaltofens (S) und/oder zur Ergänzung der Menge des durch die Ammoniakspaltung erzeugten Wasserstoffs (6) verwendet werden.

5. Verfahren nach einem der Ansprüche 2 bis 4, **dadurch gekennzeichnet, dass** zur Trennung des Spaltgases (5) ein Druckwechseladsorber (D) eingesetzt wird.

6. Verfahren nach einem der Ansprüche 1 bis 5, **dadurch gekennzeichnet, dass** das im Spaltgas (3) zur Entfernung vom im Spaltofen (S) nicht umgesetzten Ammoniaks einer Wasserwäsche (W) unterzogen wird.

7. Verfahren nach Anspruch 6, **dadurch gekennzeichnet, dass** das Spaltgas (5) in der Wasserwäsche (W) auf eine Temperatur zwischen 30 und 70°C abgekühlt wird, um Wasser auszukondensieren und Ammoniak durch das auskondensierte Wasser auszuwaschen.

8. Verfahren nach einem der Ansprüche 1 bis 7, **dadurch gekennzeichnet, dass** aus dem Spaltgas (5) in der Wasserwäschen (W) ausgewaschenes Ammoniak (4) in den Spaltofen (S) zurückgeführt wird.

9. Verfahren nach einem der Ansprüche 1 bis 8, **dadurch gekennzeichnet, dass** im Spaltofen erhaltenes heißes Spaltgas zur Beheizung eines Spaltreaktors genutzt wird, in dem durch die Spaltung von Ammoniak in Wasserstoff und Stickstoff ein weiters Spaltgas gebildet wird.

10. Vorrichtung zur Erzeugung eines Wasserstoffprodukts (6) aus Ammoniak, mit einem zumindest einen Brenner (B) umfassenden Spaltofen (S) zur katalytisch unterstützten Umsetzung eines Ammoniak enthaltenden Einsatzstoffs (1) zu einem Wasserstoff und Stickstoff enthaltenden Spaltgas (3), einer Trenneinrichtung (T), mit der Wasserstoff (6) aus dem Spaltgas (3) unter Erhalt eines stickstoffreichen, brennbare Stoffe umfassenden Restgases (7) abgetrennt werden kann, sowie einer Rückführeinrichtung, über die zumindest ein Teil des Restgases (7) zurückführbar ist, um über den zumindest einen Brenner (B) zur Befeuerung des Spaltofens (S) verbrannt zu werden, **dadurch gekennzeichnet, dass** sie eine mit dem zumindest einen Brenner (B) verbundene Sauerstoffquelle (E) umfasst, aus der ein sauerstoffreicher Stoffstrom (8) entnommen und direkt oder nach Zumischung von Luft (13) bei der Verbrennung des Restgases (7) als Oxidationsmittel eingesetzt werden kann.

11. Vorrichtung nach Anspruch 10, **dadurch gekennzeichnet, dass** es sich bei der Sauerstoffquelle um einen Elektrolyseur (E) handelt, der Wasser (9) elektrochemisch zerlegen und einen wasserstoff- (11) sowie einen sauerstoffreichen Stoffstrom (8) erzeugen kann.

12. Vorrichtung nach einem der Ansprüche 10 oder 11, **dadurch gekennzeichnet, dass** die Trenneinrichtung (T) einen Druckwechseladsorber (D) umfasst.

13. Vorrichtung nach Anspruch 12, **dadurch gekennzeichnet, dass** die Trenneinrichtung (T) eine stromaufwärts des Druckwechseladsorbers (D) angeordnet Wasserwäsche (W) zur Abtrennung von Ammoniak (4) aus dem Spaltgas (3) umfasst.

14. Vorrichtung nach Anspruch 13, **dadurch gekennzeichnet, dass** die Wasserwäsche (W) ohne eine Zuführeinrichtung für zusätzliches Waschwasser und einer Kühleinrichtung ausgeführt, die in der Lage ist, das Spaltgas (3) bis auf Temperaturen zwischen 30°C und 70°C abzukühlen.

15. Vorrichtung nach einem der Ansprüche 10 bis 14, **dadurch gekennzeichnet, dass** sie einen Spaltreaktor zur Spaltung von Ammoniak umfasst, der durch im Spaltofen (S) erhältliches Spaltgas beheizbar ist.
